# EUROPÄISCHE PATENTSCHRIFT

(11) **EP 2 619 029 B1**
(45) Veröffentlichungstag und Bekanntmachung des Hinweises auf die Patenterteilung: **04.03.2015**
(21) Anmeldenummer: 11767917.5
(22) Anmeldetag: 20.09.2011
(51) Int. Cl.: B60N 2/48

(54) **IN X-RICHTUNG VERSTELLBARE KOPFSTÜTZE**
HEAD RESTRAINT ADJUSTABLE IN THE X-DIRECTION
APPUIE-TÊTE MOBILE DANS LA DIRECTION X

(30) Priorität: 20.09.2010 DE 102010045736
(43) Veröffentlichungstag der Anmeldung: 31.07.2013
(73) Patentinhaber: Johnson Controls GmbH, 51399 Burscheid (DE)
(72) Erfinder: HEMMELRATH, Rudolf, 51377 Leverkusen (DE); FROTZ, Thomas, 51399 Burscheid (DE); QUANDT, Denis, 51069 Köln-Duennwald (DE)
(74) Vertreter: Wolff, Felix
(86) Internationale Anmeldenummer: PCT/EP2011/004708
(87) Internationale Veröffentlichungsnummer: WO 2012/038067

(56) Entgegenhaltungen:
- DE-A1-102006 016 270
- DE-A1-102008 011 336
- US-A1- 2004 195 894

## Beschreibung

Die vorliegende Erfindung betrifft eine Kopfstütze mit einem Kopfstützkasten, der an mindestens einer Haltestange gelagert und der in X-Richtung verschiebbar vorgesehen ist.

Derartige Kopfstützen sind aus dem Stand der Technik bekannt und werden in X-Richtung, d. h. zum Kopf des Sitzinsassen hin und davon weg zu Komfort- und/oder Sicherheitszwecken verstellt. Dabei besteht für den Fachmann das ständige Bestreben derartige Kopfstützen möglichst einfach jedoch funktionssicher zu gestalten.

Eine gattungsgemässe Kopfstütze ist aus dem Dokument DE-A-102006016270 bekannt.

Es war deshalb die Aufgabe der vorliegenden Erfindung eine Kopfstütze zur Verfügung zu stellen, die in einfacher Weise jedoch sicher in X-Richtung verstellbar vorgesehen ist.

Gelöst wird die Aufgabe mit einer Kopfstütze mit den Merkmalen des Patentanspruchs 1.

Beschrieben wird eine Kopfstütze mit einem Kopfstützkasten, der an mindestens einer Haltestange gelagert und der in X-Richtung verschiebbar vorgesehen ist, wobei in dem Kopfstützkasten ein Synchronisationsmittel vorgesehen ist, das fest mit dem Kopfstützkasten verbunden ist.

Die vorliegende Erfindung betrifft eine Kopfstütze. Derartige Kopfstützen sind beispielsweise an der Rückenlehne oder an der Karosserie eines Kraftfahrzeuges vorgesehen. Diese Kopfstützen sind vorzugsweise in Z-Richtung, d. h. rauf und runter sowie gegebenenfalls in ihrem Neigungswinkel verstellbar.

Die erfindungsgemäße Kopfstütze weist einen Kopfstützkasten auf, der an mindestens einer, vorzugsweise zwei Haltestangen gelagert ist. Bei dem Kopfstützkasten kann es sich um ein Element mit sechs Seitenflächen handeln. Ein Kopfstützkasten im Sinne der Erfindung ist jedoch beispielsweise auch eine Schale, die an einer Seite nicht verschlossen ist. Erfindungsgemäß ist dieser Kopfstützkasten nun in X-Richtung, d.h. zum Kopf des Sitzinsassen hin und davon weg, verschiebbar vorgesehen. Weiterhin erfindungsgemäß ist in dem Kopfstützkasten ein Synchronisationsmittel vorgesehen, das fest mit dem Kopfstützkasten verbunden ist. Dadurch ist der Kopfstützkasten einfach und sicher in X-Richtung verstellbar ohne zu verkanten.

Vorzugsweise ist der Kopfstützkasten in der jeweils gewünschten Stellung arretierbar.

Erfindungsgemäß ist das Synchronisationselement mindestens ein Riemen, dessen Enden jeweils an der Innenseite des Kopfstützkastens insbesondere an gegenüberliegenden Seiten des Kopfstützkastens, befestigt sind. Die erfindungsgemäße Kopfstütze weist pro Verstellrichtung zwei Riemen auf die zumindest abschnittsweise parallel vorgesehen sind. Die Riemen erlauben eine Synchronisation der Bewegung des Kopfstützkastens sowohl in X-als auch in Z-Richtung, d.h. rauf und runter. Vorzugsweise sind deshalb vier Riemen mit acht Befestigungspunkten in dem Kopfstützkasten der erfindungsgemäßen Kopfstütze vorgesehen. Die Riemen wirken vorzugsweise reibschlüssig mit einem Basiselement zusammen. Das Basiselement ist vorzugsweise mit der oder den Haltestange(n) verbunden. In einer bevorzugten Ausführungsform der vorliegenden Erfindung besteht dieses Basiselement aus jeweils zwei Stangen pro Verstellrichtung, d. h. bei einer Verstellung in X-und Z-Richtung weist das Basiselement vier Stangen auf. Vorzugsweise haben die Stangen einen kreisförmigen Querschnitt und ganz besonders bevorzugt sind zwei dieser Stangen auf den Haltestangen der Kopfstütze gelagert. Die Stangen sind vorzugsweise drehfest vorgesehen. Sie können als ein Teil gefertigt oder miteinander verbunden sein.

Jeder Riemen wird S-schlagförmig um jeweils zwei Stangen geführt.

In einer weiteren bevorzugten Ausführungsform weist der Riemen Form- und/oder Kraftschlussmittel auf. Ganz besonders bevorzugt handelt es sich bei dem Riemen deshalb um einen Zahnriemen. Der Riemen wirkt form- und/oder kraftschlüssig mit einem Drehkörper beispielsweise mit Rollen zusammen, die ganz besonders bevorzugt drehbar an den Haltestangen der Kopfstütze gelagert sind. Auch bei dieser bevorzugten Ausführungsform der vorliegenden Erfindung wird der Riemen S-schlagförmig geführt, wobei er dabei vorzugsweise einmal, besonders bevorzugt zwischen den beiden Drehköpern, um 180° um seine Längsachse gedreht wird und/oder Form- und/oder Kraftschlussmittel auf zwei gegenüberliegenden Oberflächen aufweist.

Im Folgenden wird die Erfindung anhand der Figuren 1-2 erläutert. Diese Erläuterungen sind lediglich beispielhaft und schränken den allgemeinen Erfindungsgedanken nicht ein.
**Figur 1** zeigt eine erste Ausführungsform der erfindungsgemäßen Kopfstütze.
**Figur 2** zeigt eine zweite Ausführungsform der erfindungsgemäßen Kopfstütze.

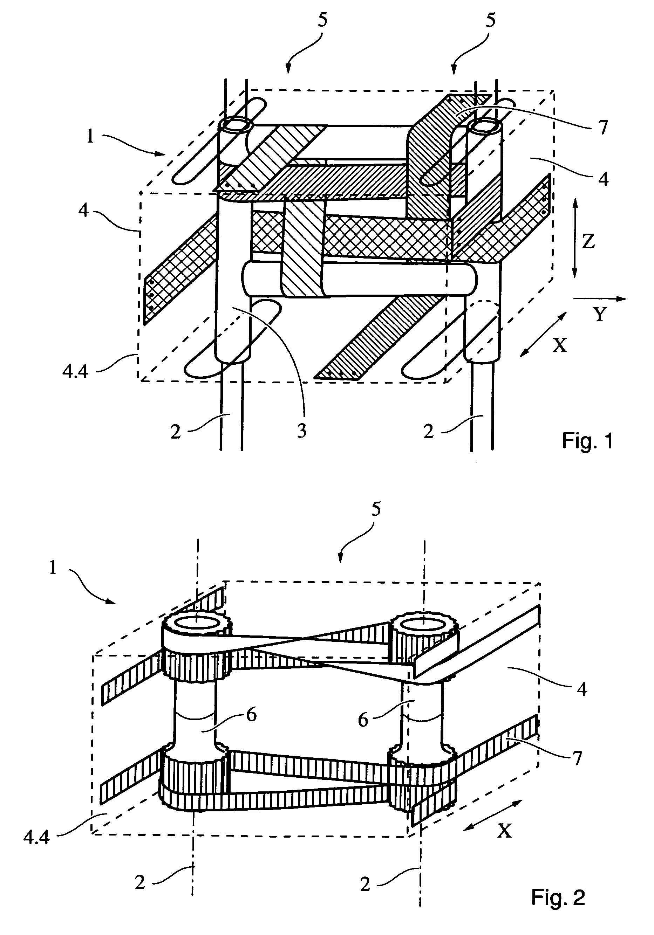

**Figur 1** zeigt eine erste Ausführungsform dieser erfindungsgemäßen Kopfstütze 1. Diese weist zwei Haltestangen 2 auf, die beispielsweise mit der Rückenlehne eines Fahrzeugsitzes verbunden sind. An diesen Haltestangen ist ein Kopfstützkasten 4 vorgesehen, der in dem vorliegenden Fall sowohl in X-Richtung als auch in Z-Richtung einstellbar vorgesehen ist, was durch die Doppelpfeile symbolisiert wird. Um sicherzustellen, dass sich der Kopfstützkasten bei dieser Bewegung nicht verkantet, weist die erfindungsgemäße Kopfstütze ein Synchronisationsmittel 5 auf. Dieses Synchronisationsmittel 5 besteht aus jeweils zwei Riemen pro Verstellrichtung. Jeder Riemen 7 ist mit seinen beiden Enden an jeweils zwei gegenüberliegenden Innenflächen des Kopfstützkastens befestigt, beispielsweise angeklebt, angeschraubt, angenietet oder dergleichen. Die beiden Riemen 7 sind zumindest abschnittsweise parallel zueinander vorgesehen. Jeder Riemen wirkt reibschlüssig mit einem Basiselement 3 zusammen, das in dem vorliegenden Fall aus zwei in Z-Richtung ausgerichteten Zylindern und zwei in Y-Richtung ausgerichteten Zylindern besteht. Jeder Riemen 7 wird S-schlagförmig um jeweils zwei parallele Zylinder geführt, wobei, pro Verstellrichtung, die sich dadurch ergebende S-Form des einen Riemens spiegelsymmetrisch zu der S-Form des anderen Riemens vorgesehen ist. Die Spiegelebene erstreckt sich hierbei in einer Ebene, die zwischen den beiden Mittellinien der beiden Zylindern aufspannbar ist. Durch die beiden Riemen pro Verstellung ist eine sichere, einfache, verwindungsfreie Verstellung des Kopfstützkastens in die jeweilige Richtung sichergestellt.

**Figur 2** zeigt eine weitere Ausführungsform der erfindungsgemäßen Kopfstütze. Im Wesentlichen kann auf die Ausführungen zu Figur 1 Bezug genommen werden, wobei in dem vorliegenden Fall die Riemen 7 zumindest einseitig Form- und/oder Kraftschlussmittel aufweisen, d. h. die Riemen sind beispielsweise als Zahnriemen vorgesehen. Vorzugsweise werden die Riemen nun wiederum S-schlagförmig um zwei in dem vorliegenden Fall drehbar vorgesehenen Drehkörper 6 geführt, die ihrerseits Form- und/oder Kraftschlussmittel, beispielsweise ein Zahnsegmente aufweisen, deren Zähne mit den Zähnen des Zahnriemens 7 zusammenwirkt. Vorzugsweise sind die Drehkörper drehbar an den Haltestangen 2 der Kopfstütze angeordnet. Vorzugsweise handelt es sich bei den Drehkörpern um Rollen. Im oberen Bereich der Figur 2 sind die Riemen in ihrem mittleren Bereich, zwischen den beiden Drehkörpern 6 um die Längsachse um 180° gedreht. Durch diese Ausführungsform der vorliegenden Erfindung ist es ausreichend, dass die Form- und/oder Kraftschlussmittel, hier die Zähne, auf einer Seite des Riemens vorgesehen sind. Im Gegensatz dazu müssen bei der im unteren Teil der Figur 2 gezeigten Ausführungsform die Riemen auf zwei sich gegenüberliegenden Seiten zumindest abschnittsweise vorgesehen sein. Sowohl im oberen als in unteren Bereich sind jeweils zwei parallele Riemen vorgesehen, deren S-Form jeweils spiegelsymmetrisch bezogen auf eine Ebene, die zwischen den Mittellinien der beiden Rollen aufspannbar ist, vorgesehen.

### Bezugszeichenliste:

- 1: Kopfstütze
- 2: Haltestange
- 3: Basiselement
- 4: Kopfstützkasten
- 4.1: Form- und/oder Kraftschlussmittel
- 4.2: Innenseite des Kopfstützkastens
- 4.3: Seitenteil parallel zur X-Richtung
- 4.4: Kopfanlagefläche
- 5: Synchronisationsmittel
- 6: Drehkörper, Rollen
- 7: Riemen, Zahnriemen
- X: X-Richtung im Fahrzeug, Richtung in und gegen die Fahrtrichtung

## Patentansprüche

1. Kopfstütze (1) mit einem Kopfstützkasten (4), der an mindestens einer Haltestange gelagert und der in X-Richtung, d.h. zum Kopf eines Sitzinsassen hin und davon weg, verschiebbar vorgesehen ist, wobei in dem Kopfstützkasten (4) ein Synchronisationsmittel (5) vorgesehen ist, das fest mit dem Kopfstützkasten (4) verbunden ist, **dadurch gekennzeichnet, dass** das Synchronisationsmittel (5) ein Riemen (7) ist, wobei die Kopfstütze (1) pro Verstellrichtung zwei Riemen (7) aufweist, die zumindest abschnittsweise parallel vorgesehen sind, wobei jeder Riemen (7) S-schlagförmig um jeweils zwei Stangen geführt ist und mit seinen beiden Enden an jeweils zwei gegenüberliegenden Innenflächen des Kopfstützkastens (4) befestigt ist.

2. Kopfstütze (1) nach Patentanspruch 1, **dadurch gekennzeichnet, dass** der Riemen (7) reibschlüssig mit einem Basiselement (3) zusammenwirkt.

3. Kopfstütze (1) nach Patentanspruch 1, **dadurch gekennzeichnet, dass** der Riemen (7) ein Zahnriemen (7) ist.

4. Kopfstütze (1) nach Patentanspruch 3, **dadurch gekennzeichnet, dass** der Zahnriemen (7) formschlüssig mit einem Drehkörper (6) zusammenwirkt.

## Claims

1. Headrest (1) having a headrest box (4) which is mounted on at least one holding rod and which is provided so as to be displaceable in the X direction, i.e. toward and away from the head of a seat occupant, there being provided in the headrest box (4) a synchronization means (5) which is fixedly connected to the headrest box (4), **characterized in that** the synchronization means (5) is a belt (7), the headrest (1) having, for each adjusting direction, two belts (7) which are provided in parallel at least in certain sections, each belt (7) being guided in an S-shaped manner about two rods in each case and being fastened with its two ends to in each case two opposite inner faces of the headrest box (4).

2. Headrest (1) according to Patent Claim 1, **characterized in that** the belt (7) interacts frictionally with a base element (3).

3. Headrest (1) according to Patent Claim 1, **characterized in that** the belt (7) is a toothed belt (7).

4. Headrest (1) according to Patent Claim 3, **characterized in that** the toothed belt (7) interacts in an interlocking manner with a rotary body (6).

## Revendications

1. Appui-tête (1) comprenant une boîte d'appui-tête (4) qui est montée sur au moins une tige de retenue et qui est prévue de manière à pouvoir être déplacée dans la direction X, c'est-à-dire en direction de la tête d'un occupant de siège et à l'écart de celle-ci, un moyen de synchronisation (5) étant prévu dans la boite d'appui-tête (4), lequel est relié fixement à la boîte d'appui-tête (4), **caractérisé en ce que** le moyen de synchronisation (5) est une courroie (7), l'appui-tête (1) comprenant deux courroies (7) par direction de réglage, lesquelles courroies sont prévues de manière parallèle au moins dans certaines sections, chaque courroie (7) étant guidée en forme de S autour de deux tiges respectives et étant fixée par ses deux extrémités à deux surfaces intérieures opposées respectives de la boîte d'appui-tête (4).

2. Appui-tête (1) selon la revendication 1, **caractérisé en ce que** la courroie (7) coopère par engagement par friction avec un élément de base (3).

3. Appui-tête (1) selon la revendication 1, **caractérisé en ce que** la courroie (7) est une couronne dentée (7).

4. Appui-tête (1) selon la revendication 3, **caractérisé en ce que** la courroie dentée (7) coopère par engagement par complémentarité de formes avec un corps rotatif (6).
